# EUROPEAN PATENT APPLICATION

(11) **EP 4 628 853 A1**
(43) Date of publication of application: **08.10.2025**
(21) Application number: 25382251.4
(22) Date of filing: 18.03.2025
(51) Int. Cl.: G01F 23/292, G01S 17/89, G01S 17/894, G01S 7/48

(54) **METHOD AND ELECTRONIC DEVICE FOR MAPPING A SURFACE, AND COMPUTER PROGRAM FOR CARRYING IT OUT**

(30) Priority: 19.03.2024 ES 202430196
(71) Applicant: RETAIL TOOLS, S.L., 28033 Madrid (ES)
(72) Inventor: PORQUERAS ALONSO, Gabriel Alberto, 28033 Madrid (ES); PAVÓN HAAS, Oscar Alberto, 28033 Madrid (ES)
(74) Representative: Elzaburu S.L.P.

(57) **Abstract**

The present invention relates to a method for mapping a surface characterised in that it comprises the following steps: receiving, in a calculator, an array of values of the distance from data captured by a multi-point laser sensor of a plurality of points of a surface; executing a directive on the calculator, wherein the directive comprises identifying valid values, invalid values and processable values in the received array of values; calculating and providing a result array of values; and mapping the surface from the result matrix of values, electronic device and computer program to carry it out.

## Description

### OBJECT OF THE INVENTION

The present invention concerns the electronic sector. Specifically, it relates to a method and electronic device for mapping a surface, and computer program for carrying it out.

### BACKGROUND TO THE INVENTION

Currently, various self-contained electronic devices with reservoir level measurement sensors are known.

Among them, depending on the technology used, are meters using ultrasound or radar technology and discriminate according to the change in density or microwave respectively, the latter case in which the technology is based on the change in dielectric constant.

These solutions have the following drawbacks or limitations.
- Low measurement capacity
- High noise in the measurement
- Low definition
- High uncertainty of the measurement obtained
- Sensor point measurements
- Lack of information regarding the maintenance status of the devices

It is, therefore, necessary to develop new developments that resolve the described drawbacks.

### SUMMARY OF THE INVENTION

Therefore, the present invention relates to a solution for mapping a test surface.

In a first aspect, the invention relates to a method for mapping said surface.

The method comprises the following steps:
A. receiving, in a calculator, data captured by a multi-point laser sensor defining an array of distance values of a plurality of points on a surface;
B. executing a directive on the calculator; and
C. mapping the surface from the result array of values.

Specifically, the directive to be executed comprises, firstly, the identification of the different values in the array of values initially received. In this regard, three types of values can be differentiated: valid values, invalid values and values to be processed or processable.

Valid values are those values received in the array of values that show a range of a real and acceptable measure, i.e. within the parameters set by the user, of the distance of the surface.

Invalid values are those values not acceptable by the user. Examples of this type are values which, due to the geometry or elements present in the environment of the surface to be measured, have a value not representative of the surface to be measured.

The values to be processed, or processable values, are those values that differ from the trend of the valid values. In other words, they are values that deviate from the range established as a valid value by a certain statistical parameter, for example, according to the standard deviation (σ) of the values determined as valid.

By way of example, in a normal distribution of the results, those values included in the range can be considered as a valid value with a confidence of 68 %, according to a standard deviation (σ). For their part, the rest of the values must be analysed individually, determining if it is an invalid value, or a processable value.

Second, the directive comprises calculating and providing a result array of data. To do this, the previously identified valid values are maintained according to the received array of values, while the invalid values are cancelled. In turn, each processable value is replaced by a new value, processed value, estimated based on at least two adjacent values, said estimate provides an estimated or processed value located between the lowest valid value and the highest adjacent valid value received.

Finally, the result array of values can be used to map the test surface.

The use of the values according to the received array of values in the calculator would generate a high noise during the mapping of the test surface using an array of values received according to the data captured by the multi-point laser sensor. For this reason, it is necessary to adapt the received array and calculate a result array that can show an image of the test surface, with greater precision.

In a second aspect of the invention, the solution relates to an electronic device for mapping a test surface. Specifically, said electronic device comprises a multi-point laser sensor, a data transmitter and a calculator.

The multi-point laser sensor comprises at least one Time-of-Flight measurement cell array module. These cells are evenly distributed in rows and columns, so that each measurement cell is configured to detect information from a point on the test surface. Due to the existence of an array module of measurement cells, data can be captured to define a data array of a plurality of points on the test surface.

For its part, the data transmitter connects to the multi-point laser sensor and is configured to transmit an array of values with the distance of a plurality of points from a test surface to a calculator.

Said calculator is thus configured to receive an array of values from the data captured by the multi-point laser sensor. Based on said array of values, the calculator is configured to provide a result array of values with which the mapping of the test surface can be performed in a more precise manner.

The execution of the directive in the calculator can be performed manually by a user of the device. Alternatively, the directive may be executed automatically. Thus, in a third aspect of the invention, a computer program is disclosed. Said computer program comprises instructions which, once loaded and executed in the calculator of an electronic device, causes the calculator to carry out step B) of executing the directive.

According to the disclosed solution, the drawbacks marked in the known solutions are resolved, where the mapping of a test surface is limited to a high noise in the measurements with the consequent low definition. On the other hand, it is possible to correct the high uncertainty of the measurement obtained in the specific measurements of the sensor, by using an array module, which additionally helps the maintenance of the device.

List of references:
1. Received array
2. Result array
3. Valid values
4. Processable values
5. Invalid values

### BRIEF DESCRIPTION OF THE DRAWINGS

Figure 1 shows an 8x8 array of distance values of a plurality of points of a surface received by a calculator according to data captured by a 64-cell multi-point laser sensor.
Figure 2 shows an 8x8 result array of distance values of a plurality of points on a surface, calculated after the directive has been executed on the calculator.
Figure 3 shows a three-dimensional graphical representation of the values calculated in the result array.

### DETAILED DESCRIPTION OF THE INVENTION

As previously indicated, in a first aspect of the invention it discloses a method for mapping a surface, said method comprising the following steps:
A. receiving, in a calculator, an array of distance values (1) from data captured by a multi-point laser sensor of a plurality of points on a surface;
B. executing a directive on the calculator; and
C. mapping the surface from the result (2) array of values.

The directive comprises a) identifying the values of the array of values (1) received in the calculator, and b) calculating and providing a result (2) array of values.

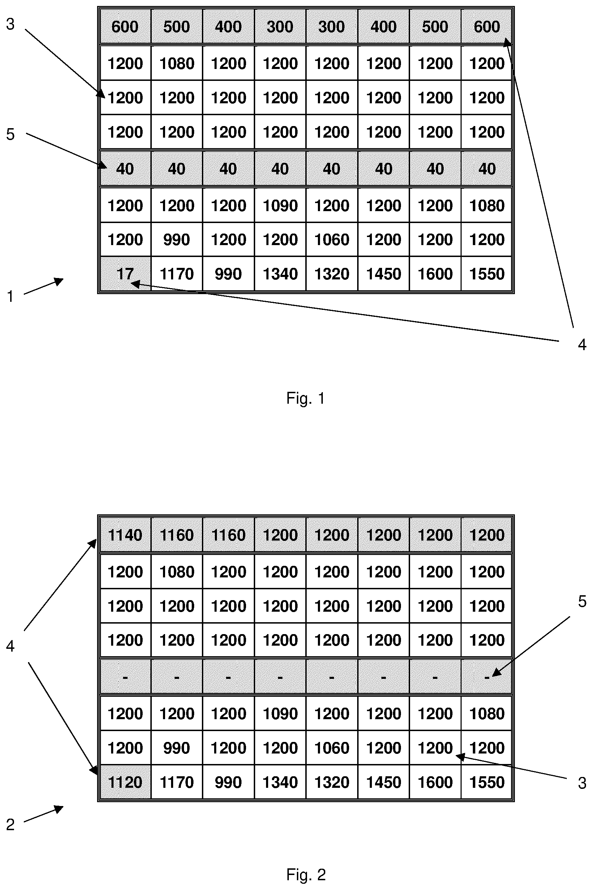

Figure 1 shows, by way of example, an 8x8 array of distance values of a plurality of points of a surface received by a calculator according to data captured by a 64-cell multi-point laser sensor.

In this figure it can be seen how the array of values received (1) in the calculator has a plurality of points, which present a great variation when mapping the test surface. The array of values received (1) in the calculator can be the result of making several repetitions of the measurement and discarding those values that are not repeated. Thus, taking values as a consequence of a specific moment on the test surface can be avoided.

Once the received (1) array of values is received, the directive is executed on the calculator. The first step of the directive is to identify valid (3) values, invalid (5) values and processable (4) values in the received (1) array of values. The range of processable (4) values can be specified in unit or group settings in a configuration panel, so that it can be modified according to the criteria and interests of a particular user.

Specifically, a set of valid (3) values is seen. In this particular case, said valid (3) values are represented in the range 900-1600 mm. There is also a row, the fifth starting at the top, where the results are uniform, with a value of 40 mm. As it is a uniform set of values, coincident with an element of the environment disposed between the device and the test surface, a user can determine that these values are part of the group of invalid (5) or null values.

On the other hand, a set of points can be seen, arranged in the upper row, with a range of distance values between 300 and 600 mm. These values are a value substantially less than the set of valid (3) values, being considered processable (4) values or values to be processed. Additionally, among the processable (4) values it is also possible to find those isolated values that have a great difference with respect to the valid values initially identified. The isolated value may even have a value lower than the invalid (5) values identified. This isolated value may be due to a malfunction of the device, which would serve as an alert for maintenance, or the existence of a specific element during the taking of measurements.

Once the identification of the values of the received (1) array of values has been performed on the calculator, the calculation and generation of the result array of values (2) is carried out.

As shown in Figure 2, the result array of values (2) is an array similar to the received (1) array initially of distance of a plurality of points on a surface, calculated once the directive has been executed in the calculator.

The new result (2) array of values is formed by the calculation defined in directive:
i. valid (3) values are maintained according to the received (1) array of values,
ii. invalid (5) values are cancelled in the result (2) array; and
iii. each processable (4) value is replaced by an estimated value based on at least two adjacent values, where the estimated value is a value between the largest and the least valid (3) adjacent value received

In this particular embodiment, the processable (4) value is replaced by the mean between the adjacent valid (3) values. Alternatively, the adjustment of the processable values may be performed according to the mode of the valid values, or according to another mathematical weighting set by a user.

In this way, unlike known solutions, the identification of the values in the received array allows updating and reviewing the maintenance of the device. Thus, an isolated processable value, such as that seen in a corner of the array, can mean the existence of an isolated fault in the array module and it can then be earmarked for maintenance.

Additionally, in a specific embodiment, the method further comprises identifying the points of the result (2) array of values comprising a value lower than a determined value.

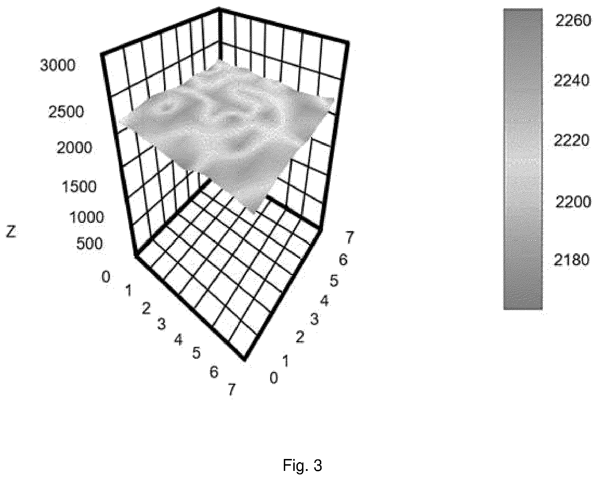

For this purpose, a three-dimensional graphical representation can be made, as shown in Figure 3, of the values calculated in the result (2) array. This representation in turn can be coloured, so that a user viewing the representation can easily locate the distance determined in the result (2) array, against a given value. This can be used, for example, to determine whether the mapped surface occupies a particular volume and an action is required to be performed in that respect.

Below, in a second aspect of the invention, the description of the electronic mapping device is detailed. Said electronic device comprises a multi-point laser sensor, a data transmitter and a calculator.

The time-of-flight multipoint laser sensor comprises at least one measurement cell array module, evenly distributed in rows and columns, wherein each measurement cell is configured to detect the distance to a point of a surface.

The data transmitter, connected to the multi-point laser sensor, is configured to transmit an array of distance values to a calculator; and the calculator is configured to receive an array of values from the data captured by the multi-point laser sensor, and provide a result array of values.

Thanks to these elements, element discrimination is possible.

In a particular embodiment, one or more Time-of-Flight (ToF) array sensor modules may be integrated, integrating a SPAD (single-photon avalanche diodes) array, physical infrared filters and diffractive optical elements (DOE). Using a DOE above the vertical-cavity surface-emitting laser (VCSEL) allows a square FoV (wide field of view) to be projected onto the scene.

In an alternative embodiment, the receiver lens focuses the reflection of this light on a SPAD array with wireless data transmission, or optionally, employing hardware configured therefor.

Alternatively, said sensor array module may be an indirect time-of-flight (iToF) and backlight array module, which allows the measurement range to be extended. Specifically, this embodiment may be combined with a 940 nm lighting system, allowing a small form factor 3D camera to be constructed that produces a high definition depth map. The resolution of the measured surface will depend on the number of measuring elements forming the array.

In a particular embodiment, the data transmitter of the device is a wireless transmitter. Alternatively, the data transmitter is a wired data transmitter. Additionally, said transmission may be programmed in time or performed under another criterion.

In another particular embodiment, the device has data storage memory.

In addition, the device can have a battery charging system, as well as a satellite or terrestrial positioning system.

The device according to the present invention allows obtaining a set of values that, once processed, for example, through the use of a computer program, enables three-dimensionally representing the shape of the measured surface.

By way of example, a use of the device may be described. In a particular embodiment, the electronic device may be installed in a container. By attending to the container or closed environment model to be measured, the values, included among the invalid (5) values of the directive, of certain cells that are measuring areas that are not strictly the surface of interest can be eliminated in a methodical manner.

Therefore, once the processed or refined measured area has been obtained, global data can be obtained, such as average, mode of the measured values, maximum and minimum values and their corresponding graphical representation. Information regarding the status of the sensors is also obtained based on the measurement given by each cell.

Thus, if a cell gives a value of zero distance, it indicates an error and depending on a quantity configured with an error, a maintenance action can be set in the directive.

In a particular embodiment, the device may integrate at least one solar panel for energy charging.

In a particular embodiment, the device further comprises at least one charge accumulator. An example of such a charge accumulator may be a battery or an energy storage capacitor. In other words, the energy storage capacitor may provide sufficient energy reserve so as not to require the use of a battery. Alternatively, the charge accumulator may be a system comprising both a battery and an energy storage capacitor. Additionally, the charge accumulator can be single-use or rechargeable.

The device can comprise a housing, configured to contain the set of elements of the device: sensor, transmitter and calculator, as well as other optional elements, such as the at least one energy accumulator. In this way, the device may be fastened with a fixed fastening system or alternatively be reconnectable via adhesive, magnetic and/or mechanical means.

In a particular embodiment, the device may complementarily equip at least one additional sensor, selected from sensors measuring parameters of the environment, temperature, humidity, accelerometer, impact, lighting, presence, sound and gases. To complement the description to be made, the following specification is accompanied by drawings on the basis of which the innovation and advantages of the invention will be more readily understood.

In a preferred embodiment, the electronic mapping device comprises a multi-point laser sensor that allows profiling the surface measured in three dimensions with the required definition, with a configuring transmitter for a wireless data transmission. The device has a housing formed by two elements, an upper housing and a lower housing preferably made of plastic material, with two led indicators for the user, corresponding to the battery level and the correct operation in the form of a light pulse, respectively. The device housing further comprises an opening where the measurement sensor is installed. Additionally, it may comprise a button on the side of the housing, configured for activation and resetting of the device.

In a third aspect of the invention, the invention relates to a computer program, which, once loaded and executed in the calculator of an electronic device, causes the calculator to execute the directive of the method for mapping a previously described surface. In this way, the use of a configuration software, embedded in the device and/or in the remote server, allows obtaining a result (2) array both automatically and manually, and in this way the user can obtain an accurate three-dimensional multi-point representation of the measured test surface.

According to the identification of each value received in the array of values (1), the value received from a certain cell of the array can be deleted, invalid (5) value, substituted, processable (4) value, according to the directive established in the device's calculator.

In view of the above description, it can be seen how the mapping method and the electronic mapping device allow profiling the surface measured in three dimensions with the required definition, reducing the noise present in the measurement initially received in the array of values (1).

## Claims

1. A computer-implemented method for mapping a surface **characterised in that** it comprises the following steps:
A. receiving, in a calculator, an array of distance values from data captured by a multi-point laser sensor of a plurality of points on a surface;
B. executing a directive on the calculator, where the directive comprises:
a. identifying valid values, invalid values and processable values in the received array of values;
b. calculating and providing a result array of values, where
i. valid values are maintained according to the received array of values,
ii. invalid values are cancelled; and
iii. each processable value is replaced by an estimated value based on at least two adjacent values, where the estimated value is a value between the largest and the least adjacent valid value received; and
C. mapping the surface from the result array of values.

2. The method for mapping a surface according to claim 1, wherein the method further comprises identifying the points of the result array of values comprising a value less than a predefined value.

3. An electronic surface mapping device, **characterised in that** it comprises:
- a time-of-flight multi-point laser sensor comprising at least one measurement cell array module, uniformly distributed in rows and columns, wherein each measurement cell is configured to detect the distance to a point of a surface;
- a data transmitter, connected to the multi-point laser sensor, configured to transmit an array of distance values to a calculator; and
- a calculator configured to receive an array of values from the data captured by the multi-point laser sensor, and provide a result array of values.

4. The electronic device according to claim 3, wherein the sensor array module is an indirect time-of-flight (iToF) array module with backlighting.

5. The electronic device according to claim 4, wherein the lighting is a 940 nm lighting system.

6. The electronic device according to any one of claims 3 to 5, wherein the data transmitter is wireless.

7. The electronic device according to any one of claims 3 to 5, wherein the data transmitter is a wired data transmitter.

8. The electronic device according to any one of claims 3 to 7, wherein the electronic device further comprises at least one additional sensor, selected from sensors measuring parameters of the environment, temperature, humidity, accelerometer, impact, lighting, presence, sound and gases.

9. The electronic device according to any one of claims 3 to 8, wherein the electronic device further comprises at least one solar panel.

10. The electronic device according to any one of claims 3 to 9, wherein the electronic device further comprises at least one charge accumulator.

11. The electronic device according to claim 10, wherein the at least one charge accumulator is a battery and/or an energy storage capacitor.

12. The electronic device according to any one of claims 10 to 11, wherein the at least one charge accumulator is a single-use accumulator.

13. A computer program **characterised in that** it comprises instructions which, once loaded and executed in the calculator of an electronic device according to any one of claims 3 to 9, causes the calculator to carry out step B) of executing the directive according to any one of claims 1 to 2.
